(19) Europäisches Patentamt
European Patent Office
Office européen des brevets

(11) **EP 3 001 882 B1**

(12) **FASCICULE DE BREVET EUROPEEN**

(45) Date de publication et mention de la délivrance du brevet:
**17.05.2017 Bulletin 2017/20**

(21) Numéro de dépôt: **14713866.3**

(22) Date de dépôt: **01.04.2014**

(51) Int Cl.:
*H01Q 3/06* *(2006.01)*    *G01S 13/88* *(2006.01)*
*G01S 13/90* *(2006.01)*   *H01Q 3/24* *(2006.01)*
*H01Q 13/12* *(2006.01)*   *H01Q 25/00* *(2006.01)*
*G01S 7/03* *(2006.01)*    *G01S 13/42* *(2006.01)*
*H01Q 1/52* *(2006.01)*    *H01Q 3/12* *(2006.01)*
*G01S 13/22* *(2006.01)*   *H01Q 5/40* *(2015.01)*

(86) Numéro de dépôt international:
**PCT/EP2014/056507**

(87) Numéro de publication internationale:
**WO 2014/161842 (09.10.2014 Gazette 2014/41)**

(54) **ANTENNE ROTATIVE, SCANNER UTILISANT UNE TELLE ANTENNE, ET DISPOSITIF DE CONTROLE DES PERSONNES**

ROTIERENDE ANTENNE, ABTASTER MIT EINER SOLCHEN ANTENNE UND VORRICHTUNG ZUR INSPEKTION VON PERSONEN

ROTARY ANTENNA, SCANNER USING SUCH AN ANTENNA, AND DEVICE FOR INSPECTING PERSONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2013 FR 1352968**

(43) Date de publication de la demande:
**06.04.2016 Bulletin 2016/14**

(73) Titulaire: **SAS SWS**
**91190 Gif Sur Yvette (FR)**

(72) Inventeurs:
• **CHEKROUN, Claude**
**F-91110 Gif Sur Yvette (FR)**

• **CHEKROUN, Gilles**
**F-91110 Gif Sur Yvette (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A1-98/11453    FR-A1- 2 841 387
FR-A1- 2 855 642    US-A- 2 633 532
US-A- 2 665 381

**Description**

La présente invention concerne une antenne notamment pour imagerie radar. L'invention concerne également un système d'imagerie comportant une telle antenne. Elle s'applique par exemple pour la détection d'objets cachés portés par des personnes, en particulier d'objets dangereux.

La surveillance des personnes dans les aéroports et plus généralement dans les lieux publics est devenue une nécessité de sécurité publique. On utilise déjà des dispositifs pour la détection d'objets dangereux dans les aéroports, et plus particulièrement pour des objets prohibés cachés par des passagers avant embarquement. Il est connu d'utiliser des détecteurs de métaux. Cependant, il des objets dangereux non métalliques, en particulier les produits explosifs qui sont indétectables avec ces dispositifs.

Il est aussi connu d'utiliser des images à rayons X pour détecter la présence d'objets suspects portés par des passagers. A cet effet, il faut balayer au rayon X toute la longueur du corps des passagers. Cela solution pose des problèmes de santé publique par exposition aux rayons X et surtout elle ne permet pas de traiter des flux importants de passagers en raison d'un temps de traitement incompressible. Il existe des problèmes d'imagerie radar qui pourraient surmonter en partie ces problèmes mais ils sont coûteux et complexes à mettre en oeuvre. FR2855642 A1 décrit un dispositif permettant de répondre en partie à ces problèmes. Le dispositif comporte une antenne de type cylindrique qui présente certains inconvénients en particulier en ce qui concerne les fuites hyperfréquence.

Un but de l'invention est notamment d'améliorer les performances d'une telle antenne ainsi que d'un système d'imagerie la comportant. A cet effet, l'invention a pour objet une antenne, un scanner et un dispositif de contrôle tels que décrits par les revendications 1, 8 et 12. D'autres caractéristiques et avantages de l'invention apparaîtront à l'aide de la description qui suit, faite en regard de dessins annexés qui représentent :

- la figure 1, une illustration du principe de fonctionnement d'une antenne selon l'invention ;
- la figure 2, une illustration du principe de réalisation d'une antenne selon l'invention ;
- la figure 3, un exemple de réalisation du support des guides d'ondes à l'intérieur de l'antenne ;
- la figure 4, la disposition du support par rapport au cylindre extérieur de l'antenne ;
- les figures 5a, 5b et 5c, une illustration du mode de détection apporté par une antenne selon l'invention ;
- les figures 6a et 6b, une illustration du mode de réalisation des guides et de leur couplage au cylindre extérieur dans une antenne selon l'invention ;
- la figure 7, un mode de réalisation possible de l'ouverture rayonnante d'une antenne selon l'invention ;
- les figures 8a et 8b, un exemple de connexions des guides d'ondes ;
- la figure 9, un exemple de réalisation d'une antenne selon l'invention permettant un champ de détection sur 360° ;
- la figure 10, un exemple de réalisation des circuits d'émission et de détection d'un radar équipé d'une antenne selon l'invention ;
- la figure 11, un exemple de réalisation d'un dispositif de contrôle selon l'invention.

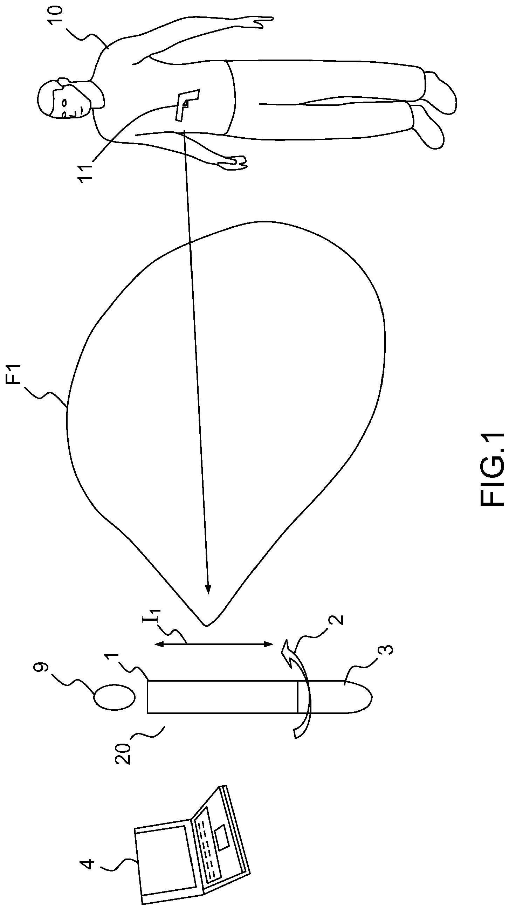

La figure 1 illustre par un schéma synoptique le principe de fonctionnement d'un système d'imagerie radar utilisant une antenne selon l'invention. On appellera par la suite scanner un tel système.

A titre d'exemple, le scanner 20 est appliqué pour la détection d'objets 11 portés par une personne 10. Le système comporte donc une antenne 1 qui produit au moins un faisceau d'émission $F_1$. L'antenne 1 est reliée à un radar 9, plus particulièrement à ses moyens d'émission et de réception. Ces derniers sont eux-mêmes reliés à des moyens de traitement. Ces derniers sont par exemple des moyens de traitement d'imagerie radar classiques réalisant une image radar qui peut être visualisée sur un écran 4. Le radar 9 fonctionne par exemple à la fréquence de 77 GHz.

Le faisceau $F_1$ émet dans une bande autour d'une fréquence propre $f_1$. Le centre de phase de chaque faisceau se déplace sur une longueur $I_1$ de sorte qu'il balaye la longueur utile de détection, par exemple la hauteur d'une personne, l'objet à observer étant une personne 10 sur laquelle on veut détecter des objets prohibés dans le cas de la figure 1. Comme on le verra par la suite, le déplacement du faisceau est obtenu par la rotation 2 d'une partie cylindrique de l'antenne, cette partie étant entraînée par un moteur 3.

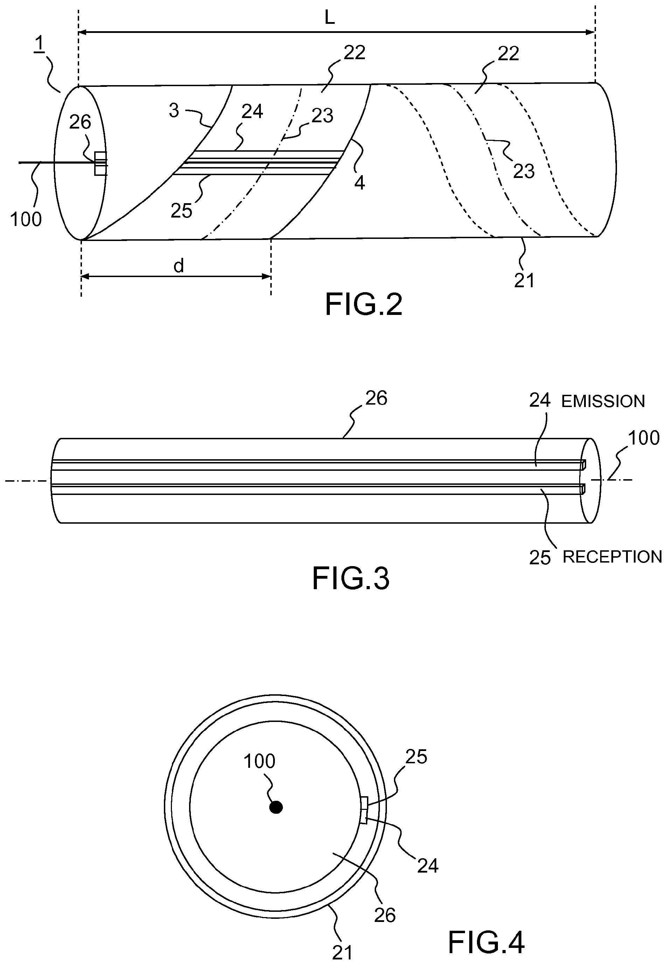

La figure 2 illustre le principe de réalisation d'une antenne selon l'invention. L'antenne comporte un cylindre métallique 21 présentant une ouverture rayonnante 22 suivant une ligne hélicoïdale 23 parcourant le tour du cylindre. L'antenne comporte au moins une paire de guides d'onde 24, 25 disposés à l'intérieur du cylindre et ouverts vers la paroi intérieure du cylindre. Un guide d'onde 24 est réservé à l'émission et l'autre guide d'onde 25 est réservé à la réception. Le guide d'émission 24 est relié aux moyens d'émission du radar et le guide de réception 25 est relié aux moyens de réception du radar. Le cylindre 21 et les guides d'ondes 24, 25 ont un mouvement de rotation relatif par rapport à l'axe 100 du cylindre. De préférence, les guides restent fixes et le cylindre 21 est animé d'un mouvement de rotation au moyen du moteur 3. Les guides 24, 25 sont placés sur un support 26 disposé à l'intérieur du cylindre 21.

La figure 3 illustre un exemple de réalisation du support 26 des guides d'onde 24, 25. Ce support 26, disposé à l'intérieur du premier cylindre 21, forme le stator dans le cas où ce cylindre 21, le rotor, est animé d'un mouvement de rotation. Les guides d'onde 24, 25 sont disposés sur le cylindre 26.

La figure 4 présente par une vue transversale la disposition du cylindre intérieur 26 par rapport au cylindre extérieur 21, les deux cylindres ayant le même axe de symétrie 100. Le diamètre du cylindre intérieur 26 est par défini de façon à ce que la face rayonnante des guides soit à une distance donnée que l'on précisera par la suite. Lorsque la face rayonnante est en regard de la partie métallisée intérieure du cylindre, et non de l'ouverture, cette face métallisée joue le rôle d'un court circuit hyperfréquence, évitant ainsi les réflexions parasites.

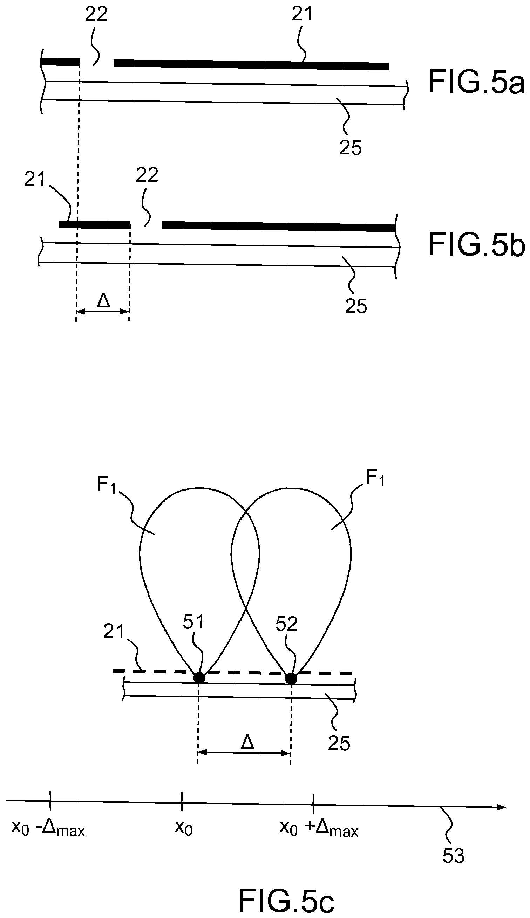

Les figures 5a, 5b et 5c illustrent le fonctionnement d'une antenne telle que décrite précédemment, plus particulièrement le mode détection qu'elle permet. Dans cet exemple, le nombre de faisceaux est égal à 1. En fonctionnement, les parties des guide 24, 25 qui font face à la paroi métallisée du cylindre 21 ne rayonnent pas, du fait de la distance $\lambda/2$ qui crée un court-circuit hyperfréquence. Les parties des guides qui sont en regard de l'ouverture 22 participent au rayonnement de l'antenne, en émission et en réception. En fait, en raison de la forme de l'ouverture 22 suivant une hélice et de sa rotation autour d'un guide, cette ouverture se présente pour ce dernier comme une ouverture glissante effectuant des allers et retours rectilignes. La figure 5a illustre une position de l'ouverture rayonnante 22 au regard du guide d'émission 24 à un instant donné $t_0$. La figure 5c illustre le faisceau d'antenne $F_1$ associé à la position de la figure 5a avec son centre de phase 51 situé au niveau du guide d'émission 24, l'illuminateur. Le faisceau $F_1$ représente ici la couverture angulaire de l'antenne. La figure 5b illustre les même éléments que ceux de la figure 5a, mais à un instant suivant $t_0 + \Delta t$. Dans le plan de la figure, l'ouverture en regard du guide s'est alors décalée d'une distance $\Delta$ par suite de la rotation du cylindre 21. Le faisceau d'antenne $F_1$ correspondant à la position de cylindre 21 de la figure 5b est représenté avec son centre de phase 52 qui s'est décalé d'une distance $\Delta$. La rotation du cylindre permet donc le déplacement continu du centre de phase du rayonnement et donc du faisceau $F_1$. Le long de l'axe 53 du guide 24, parallèle à l'axe 100 du cylindre, le centre de phase se déplace entre une position $x_0 - \Delta_{Max}/2$ et $x_0 + \Delta_{Max}/2$. L'amplitude du déplacement $\Delta_{Max}$ dépend du pas de l'hélice 23 que suit l'ouverture rayonnante. La vitesse de rotation du cylindre 21 est telle que le centre de phase 52 se déplace linéairement à une vitesse qui peut atteindre 3000 m/s.

La largeur du faisceau $F_1$ est fonction de la largeur d de l'ouverture rayonnante. Plus d est petite, plus le faisceau d'antenne est large. La largeur à 3dB du faisceau $F_1$ est $\lambda/d$, où $\lambda$ est la longueur d'onde émise. Le principe de balayage est le même en réception avec le guide de réception 25.

La rotation du cylindre permet donc le déplacement continu du centre de phase du rayonnement, et permet ainsi d'obtenir un fonctionnement du type radar à antenne synthétique ou SAR. Cette propriété est par les moyens de traitement du radar 9 pour obtenir et analyser des images radar à haute résolution. Pour mémoire, les radars à antenne synthétique sont des radars dont l'antenne est orientée perpendiculairement à la route du porteur. C'est le porteur du radar, et plus particulièrement de l'antenne, qui dans son déplacement engendre l'observation de l'espace. Dans le cas présent, le déplacement du porteur est simulé par le déplacement du centre de phase. Les deux dimensions de l'image radar sont définies par la direction de propagation et le déplacement du porteur. La résolution spatiale, qui conditionne la finesse de l'image observée, est donc obtenue :

- dans la direction perpendiculaire au mouvement du porteur par la résolution en distance du radar ;
- dans la direction du mouvement du porteur par la largeur du faisceau F1.

Le traitement du type SAR est notamment décrit dans l'ouvrage de J.Darricau : Physique et Théorie du Radar -Tome 3, 3ème édition - Chapitre 21, page 483 - Editeur Sodipe, Paris 1994.

Un ensemble de récepteurs disposés le long de l'axe 53 est alors reconstitué dans le temps comme dans une application de type SAR, permettant ainsi de réaliser des images radar de formes simples. En effet, à partir des points brillants détectés, une reconstitution de signal est effectuée permettant de réaliser des images notamment de dièdres de faibles dimensions. Un point brillant est un point ou une surface élémentaire réfléchissant les ondes électromagnétiques. A partir d'images de formes simples, on peut reconstituer des objets cachés.

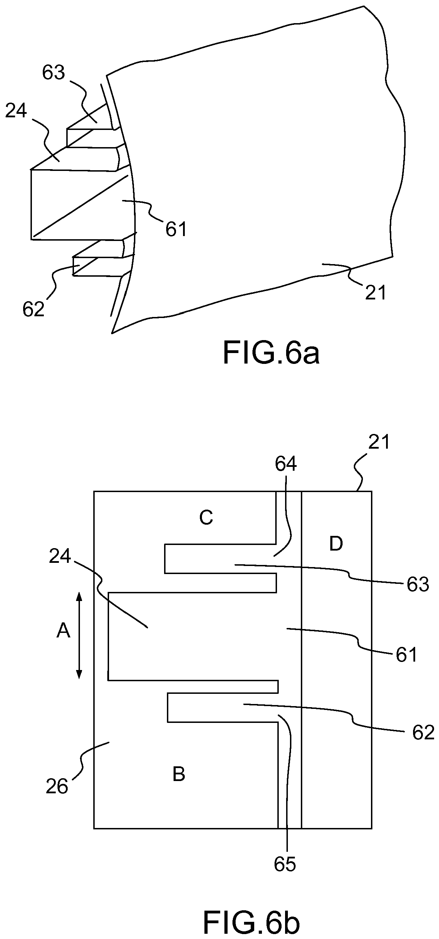

Les figures 6a et 6b illustrent le mode de réalisation des guides et leur couplages au cylindres et extérieur 21. La figure 6a est une vue partielle en perspective. La figure 6b est une vue en coupe partielle où le rayon de courbure n'a pas été représenté pour des raisons de simplification.

On présente la réalisation d'un guide, à titre d'exemple on considère le guide d'émission 24. Le guide de réception 25 est réalisé et couplé de la même façon.

Le guide d'onde 24 est un guide à section rectangulaire comportant une ouverture rayonnante 61. La face intérieure métallisée du cylindre extérieur 61 forme un court-circuit pour fermer le guide. La rotation du cylindre 21 autour du guide 24 a pour effet de créer une fente rayonnante qui se déplace le long de ce guide. Ce dernier est relié par une extrémité aux circuits d'émission du radar 9. Il est relié à son autre extrémité à une charge adaptée.

Selon l'invention, deux cavités 62, 63 parallèles sont réalisées de chaque côté du guide 24, sur toute sa longueur. Les ouvertures 64, 65 des cavités sont sensiblement dans le plan de l'ouverture 61 du guide, plus précisément dans une même ligne de courbure. Avantageusement, ces cavités piègent les ondes hyperfréquence et limitent très fortement, voire suppriment les fuites hyperfréquences.

Ces cavités 62, 63 sont moins larges et moins profondes que le guide. Les dimensions sont par exemple les suivantes, λ étant la longueur d'onde émise, correspondant à la fréquence centrale :

- Profondeur du guide 24 : 0,75 λ ;
- Largeur du guide 24 : 0,35 λ ;
- Profondeur d'une cavité latérale 62, 63 : 0,25 λ ;
- Largeur d'une cavité latérale 62, 63 : 0,12 λ ;

La distance entre l'ouverture 61 du guide et les ouvertures 64, 65 des cavités d'une part et la face intérieure du cylindre 21 peut aller de 0,1 λ à 2 λ. Dans un cas d'application avec un radar 9 fonctionnant à 77 GHz, λ est de l'ordre de quelques millimètres.

Dans l'exemple des figures 6a et 6b, le guide émet selon la composante E, l'ouverture rayonnante étant réalisée sur un petit côté du guide.

La figure 6b présente un mode de réalisation où le guide 24 et les cavités 62, 63 sont réalisés dans le cylindre intérieur 26. A cet effet, ce cylindre peut être métallique. Son diamètre peut être de l'ordre de quelques centimètres.

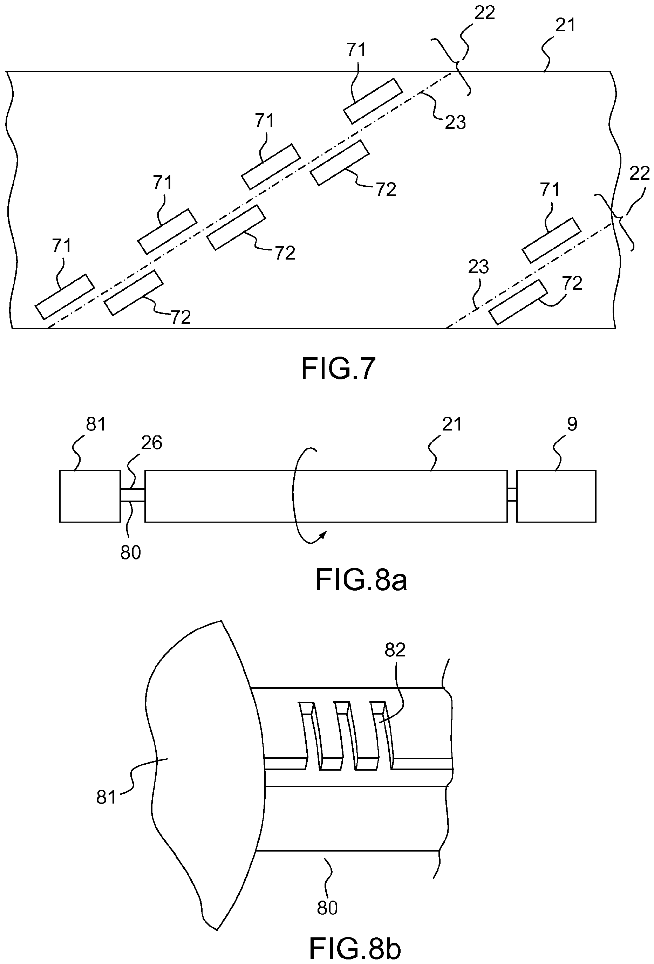

La figure 7 présente un mode de réalisation possible de l'ouverture rayonnante 22. La figure 2 montre que l'ouverture rayonnante 22 suit une ligne en spirale 23 autour du cylindre 21.

Plus particulièrement, la figure 7 présente le cylindre en vue développée, partielle, dans un plan. Le cylindre 21 est obtenu en enroulant la surface présentée en figure 7. La ligne 23 en hélice autour du cylindre est représentée sur cette surface plane.

L'ouverture rayonnante 22 est formée d'une succession d'ouvertures élémentaires 71, 72 disposées de chaque côté de la ligne 23. Une première série d'ouvertures élémentaires 71 est disposée d'un côté et une deuxième série d'ouvertures élémentaires 72 est disposée de l'autre côté. Les positions des ouvertures 72 de la deuxième série sont décalées par rapport aux positions des ouvertures 71 de la première série de sorte que l'ouverture rayonnante 22 est formée successivement d'une ouverture 71 d'un côté de la ligne 23 puis d'une ouverture 72 disposée de l'autre côté et ainsi de suite. De préférence, les ouvertures 71,72 ne se chevauchent pas mais la ligne hélicoïdale 23 est continument bordée par une ouverture 71, 72.

Ces ouvertures peuvent être rectangulaires, le grand côté étant disposé le long de la ligne 23.

Avantageusement, la réalisation de l'ouverture rayonnante 22 basée sur ces ouvertures élémentaires est simple à réaliser. Par ailleurs ces ouvertures élémentaires, de petites dimensions, ne sont se déforment pas, ou très peu, sous l'effet de la force centrifuge due à la vitesse de rotation élevée du cylindre 21. Le traitement radar sait tenir compte de la forme de l'ouverture rayonnante et notamment de la disposition intercalées des ouvertures rayonnantes de chaque côté de la ligne hélicoïdale 23.

Les figures 8a et 8b illustrent les connexions des guides 24, 25 aux deux extrémités du cylindre support 26. A une extrémité, les guides 24, 25 sont reliés aux circuits d'émission et de réception du radar 9. Cette liaison se fait classiquement et facilement dans la mesure où le les guides sont fixes par rapport au radar, le cylindre extérieur 21 étant seul animé d'un mouvement de rotation. A l'autre extrémité, les guides sont connectés à une charge hyperfréquence adaptée 81, définie pour éviter les ondes stationnaires. Pour améliorer l'adaptation, une ou plusieurs cavités 82 sont réalisées, perpendiculairement aux guides. Ces cavités débouchent sur guide perpendiculairement à sa longueur. Elles ont par exemple même profondeur et même largeur que les guides. Avantageusement, elles piègent des ondes réfléchies à l'extrémité et réduisent ainsi considérablement le taux d'ondes stationnaires. La figure 8b présente un exemple avec trois cavités, permettant d'obtenir un résultat optimum. On peut éventuellement placer une seule cavité.

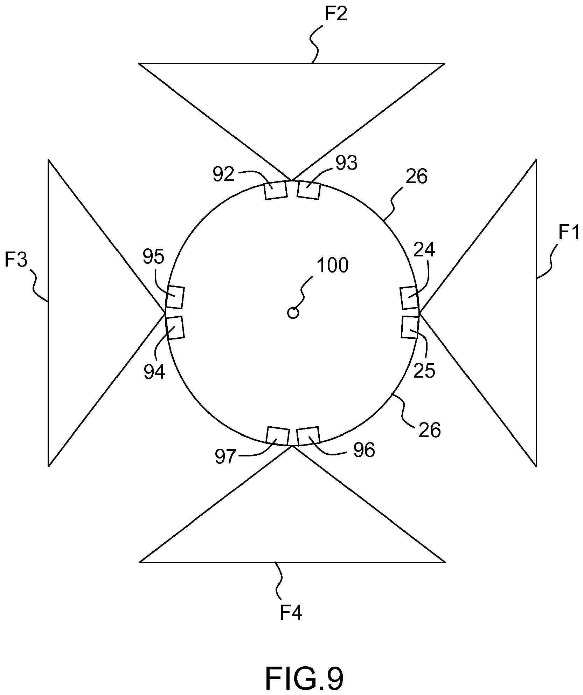

La figure 9 illustre un exemple de réalisation d'une antenne selon l'invention permettant une vision sur 360°, pour un système de détection à quatre quadrants. Sur cette figure, le cylindre en rotation 21 n'est pas représenté. On présente par une vue en coupe le cylindre fixe 26 sur lequel sont disposés quatre paires de guides d'onde 24, 25, 92, 93, 95, 96, 97, 98 séparées chacune de 90° produisant quatre faisceaux F1, F2, F3, F4 selon quatre directions régulièrement réparties autour de l'axe 100 de l'antenne.

Les guides sont par exemple réalisés dans le cylindre 26. Chaque paire de guide est réalisée comme la paire 24, 25 décrite précédemment. On obtient ainsi quatre faisceaux F1, F2, F3, F4 balayant l'espace selon l'axe 100 de l'antenne sur une distance égale au pas de l'hélice 23 de l'ouverture rayonnante. Les directions des faisceaux F1, F2, F3, F4 sont respectivement à 0°, 90°, 180° et 270°.

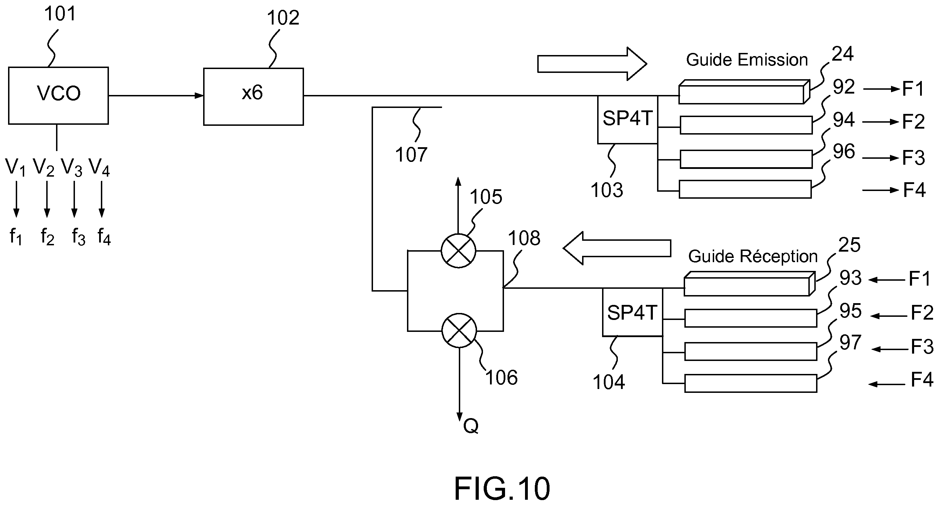

La figure 10 illustre un exemple de réalisation des circuits d'émission et de réception correspondant à l'architecture d'antenne présentée en figure 9. La génération de fréquence est produite par un oscillateur commandé en tension 101, appelé VCO. Plus particulièrement, le générateur 101 produit quatre fréquences $f_1$, $f_2$, $f_3$, $f_4$ destinées respectivement aux faisceaux F1, F2, F3, F4 décrits précédemment. Une fréquence caractérise ainsi chacune des quatre directions d'observation.

Un multiplieur de fréquence 102 est par exemple connecté en sortie du générateur. Les fréquences sont ainsi multipliées pour atteindre des fréquences proches de la fréquence centrale, égale à 77 GHz par exemple. Le multiplieur 102 peut également faire fonction d'amplification. Ce dernier est relié en sortie à l'entrée d'un commutateur 103 de type SP4T. Chacune des quatre sortie du commutateur est couplée à un guide d'émission 24, 92, 94, 96 du cylindre fixe 26. Le commutateur 103 est synchronisé avec le générateur de fréquences 101 pour aiguiller les fréquences $f_1$, $f_2$, $f_3$, $f_4$ vers les guides qui leur sont alloués, ces fréquences $f_1$, $f_2$, $f_3$, $f_4$ étant générées successivement par le générateur 101. On effectue ainsi un multiplexage des fréquences vers les guides sans contrainte de temps particulières car les objets à analyser, objets portés par des passants notamment, se déplacent lentement.

En réception, un deuxième commutateur 104, de type SP4T, est couplé aux guides de réception 25, 93, 95, 97, chaque guide étant relié à une entrée du commutateur. La sortie du commutateur 104 est reliée, via un coupleur 3dB 108, à deux mélangeurs 105, 106. L'autre entrée des mélangeurs est reliée à la sortie d'un coupleur 107 placé sur la ligne d'émission. Une fraction de l'onde émise est ainsi mélangée aux signaux de réception, formant ainsi une réception de type homodyne. Un mélangeur 105 fournit en sortie la composante directe $I(t)$ des signaux reçus et le deuxième mélangeur fournit en sortie la composante en quadrature $Q(t)$ des signaux reçus. Les composantes ainsi mesurées sont ensuite prises en compte par les moyens de traitement radar pour le calcul de l'image.

La formation de l'image $\text{Im}(x_i, y_j)$ en un point $(x_i, y_j)$ s'effectue par l'intégration des signaux reçus dans un temps d'analyse $T$. L'image $\text{Im}(x_i, y_j)$ est alors donnée par la relation suivante :

$$\text{Im}(x_i, y_j) = \int_0^T (I(t) + iQ(t)).\exp\left[ -\text{i}\frac{4\pi}{\lambda}\left( L(x_i, y_j, t) \right) \right]$$

Où $L(x_i, y_j, t)$ est la distance entre l'ouverture rayonnante à l'instant t et le point d'analyse $(x_i, y_j)$ sur l'individu, $\lambda$ représentant la longueur d'onde.

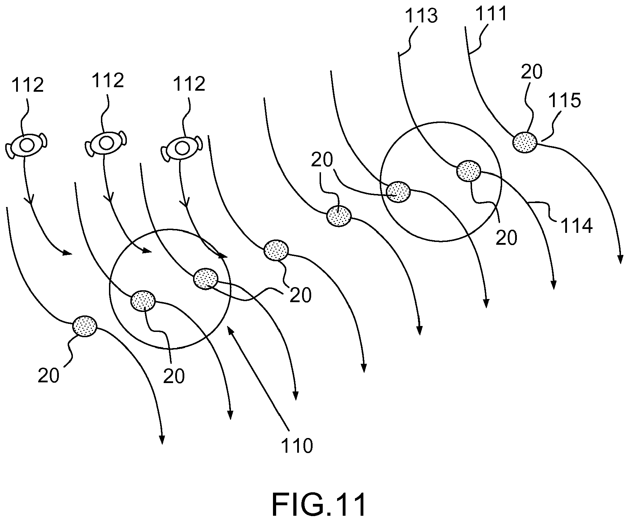

La figure 11 illustre un dispositif de contrôle selon l'invention. Le dispositif utilise un ensemble de scanners 20 tels qu'illustré par la figure 1 équipé d'une antenne 1 selon l'invention, dans une configuration quatre quadrants conformément à la figure 9. Le dispositif comporte également un ensemble de couloirs contigus 110. Les couloirs peuvent être délimités par des parois 111, mais d'autres délimitations sont possibles. Ces couloirs sont empruntés par les passants 112 à contrôler, par exemple des passagers d'un avion avant l'embarquement. Ils servent en fait à guider le trajet des passagers avant et après le passage entre deux scanners 20. Le dispositif comporte plusieurs couloirs en parallèle afin d'obtenir un flux important de personnes à contrôler. Le nombre de couloirs est fonction du flux que l'on souhaite atteindre. Dans un cas particulier, le dispositif comporte un seul couloir et deux scanners.

Selon l'invention, les couloirs suivent une courbure particulière et les scanners sont placés à endroit spécifique de la courbure. Chaque couloir suit une première courbure 113 puis une deuxième courbure 114 opposée par rapport à la première. Les limites 111 des couloirs suivent ces courbures. Les scanners sont judicieusement placés sur les limites des couloirs aux endroits 115 ou les courbures changent de sens, ou à des endroits sensiblement proches. De cette façon, on obtient une vision exhaustive des passants par l'imagerie radar des scanners. Une vision complète de face des passants 112 est obtenue au moyen des deux scanners 20 d'un couloir, lorsque les passants sont en amont des scanners, au moins par le scanner qui fait le plus face aux passants. Une vision complète de dos des passants 112 est obtenue au moyen de ces deux scanners lorsque les passants sont en aval, au moins par l'autre scanner. La vision latérale complète des passants est obtenue lorsque ceux-ci passent entre les scanners.

Lorsque l'image radar révèle la présence d'un objet susceptible d'être dangereux, une alarme peut être déclenchée. Elle peut être déclenchée automatiquement ou par une personne qui visualise les images radar sur un écran 4.

Un dispositif tel qu'illustré par la figure 11 permet d'obtenir une très grande fluidité de passage. Ainsi, 300 personnes par heure peuvent passer à l'intérieur d'un couloir et être contrôlées en toute fiabilité.

Avantageusement un tel dispositif peut être utilisé à l'entrée de salles d'embarquement pour contrôler les passagers en vue détecter des objets potentiellement dangereux portés par ces passagers.

## Revendications

1. Antenne comportant au moins un guide d'onde de section rectangulaire (24, 25) et un cylindre (21) ayant une ouverture (22) suivant une ligne hélicoïdale (23), ledit cylindre ayant un mouvement de rotation relatif par rapport au guide d'onde placé à l'intérieur dudit cylindre, le guide d'onde étant ouvert en regard de la face intérieure dudit cylindre laquelle forme un court-circuit hyperfréquence pour fermer le guide, **caractérisée en ce que** deux cavités (62, 63) sont réalisées de chaque côté du guide (24, 25), parallèlement à celui-ci, sur toute sa longueur, les ouvertures (64, 65) des cavités étant sensiblement dans le plan de l'ouverture (61) du guide.

2. Antenne selon la revendication 1, **caractérisée en ce que** l'ouverture (22) est formée d'une succession d'ouvertures élémentaires (71, 72) disposées de chaque côté de la ligne hélicoïdale (23), une première série d'ouvertures élémentaires (71) étant disposée d'un côté et une deuxième série d'ouvertures élémentaires (72) étant disposée de l'autre côté, les positions des ouvertures (72) de la deuxième série étant décalées par rapport aux positions des ouvertures (71) de la première série de sorte que l'ouverture rayonnante (22) est formée successivement d'une ouverture (71) d'un côté de ladite ligne (23) puis d'une ouverture (72) disposée de l'autre côté et ainsi de suite.

**3.** Antenne selon la revendication 2, **caractérisée en ce que** lesdites ouvertures sont rectangulaires, le grand côté étant disposé le long de hélicoïdale (23).

**4.** Antenne selon l'une quelconque des revendications précédentes, **caractérisée en ce que** le guide (24,25) étant connecté à une extrémité à des circuits d'émission et de réception d'un radar (9) et à son autre extrémité à une charge adaptée (81), au moins une cavité (82) débouche sur le guide à ladite autre extrémité.

**5.** Antenne selon l'une quelconque des revendications précédentes, **caractérisée en ce qu'**elle comporte quatre paires de guides d'ondes (24, 25, 92, 93, 94, 95, 96, 97) disposées chacune à angle droit l'une par rapport à l'autre, chaque paire comportant un guide d'émission (24, 92, 94, 96) et un guide de réception (25, 93, 95, 97).

**6.** Antenne selon l'une quelconque des revendications précédentes, **caractérisé en ce que** le cylindre (21) est animé d'un mouvement de rotation au moyen d'un moteur (3).

**7.** Antenne selon l'une quelconque des revendications précédentes, **caractérisé en ce qu'**elle est apte à fonctionner avec un radar millimétrique.

**8.** Scanner délivrant une image radar, **caractérisé en ce qu'**il comporte au moins :

  - une antenne (1) selon l'une quelconque des revendications précédentes,
  - un radar millimétrique (9) et ;
  - des moyens de visualisation de ladite image,

l'antenne (1) étant reliées aux circuits d'émission et de réception dudit radar (9), un faisceaux d'antenne (F1, F2, F3, F4) rayonné par un guide d'onde se déplaçant parallèlement à l'axe (100) de l'antenne (1) lorsque le cylindre (21) est en rotation, les moyens de traitement dudit radar réalisant une image de type SAR d'une cible à partir des signaux reçus de ladite cible.

**9.** Scanner selon la revendication 8, **caractérisé en ce que** l'antenne comportant plusieurs paires de guides d'onde, chaque paire comportant un guide d'émission et un guide de réception, les circuits d'émission et de réception comportent au moins :

  - un générateur (101) de fréquences ($f_1$, $f_2$, $f_3$, $f_4$), chaque fréquence étant attribuée à une paire donnée ;
  - un premier commutateur (103) aiguillant les signaux issus dudit générateur vers les guides d'émission (24, 92,94, 96) de façon synchronisée avec la génération de fréquences ;
  - un deuxième commutateur (104) aiguillant les signaux issus des guides de réception vers les circuits de réception, de façon synchronisée avec la génération de fréquence.

**10.** Scanner selon l'une quelconque des revendications 8 ou 9, **caractérisé en ce que**, la réception étant du type homodyne, les circuits de réception comportent au moins :

  - un coupleur (107) branché sur la ligne d'émission ;
  - un premier mélangeur (105) ;
  - un deuxième mélangeur (106)

le premier mélangeur recevant en entrée le signal issu du coupleur (107) et le signal de réception et le second mélangeur recevant en entrée le signal issu du coupleur (107) et le signal de réception décalé en phase de $\pi/2$.

**11.** Scanner selon l'une quelconque des revendications 9 et 10, **caractérisé en ce que** l'antenne comporte un nombre de paires de guides d'ondes de façon à ce que l'ensemble des faisceaux d'antenne (F1, F2, F3, F4) balaye l'espace selon 360° autour de l'axe d'antenne (100)

**12.** Dispositif de contrôle de personnes, **caractérisé en ce qu'**il comporte :

- au moins un couloir courbe (110), présentant une première courbure (113) et une deuxième courbure (114) opposée à la première courbure ;
- des scanners (20) selon la revendication 11, deux scanners (20) par couloir étant placés sensiblement à l'endroit (115) où la courbure change de sens, les personnes à contrôler passant entre lesdits deux scanners, lesdits scanner réalisant des images radars sur 360 °.

**13.** Dispositif de contrôle selon la revendication 12, **caractérisé en ce que** les couloirs sont contigus.

**14.** Dispositif de contrôle selon l'une quelconque des revendications 12 ou 13, **caractérisé en ce qu'**il est apte à être utilisé dans des zones d'embarquement pour le contrôle des passagers.

**Patentansprüche**

**1.** Antenne, umfassend mindestens einen Wellenleiter mit einem rechteckigen Abschnitt (24, 25) und einem Zylinder (21) mit einer Öffnung (22), die einer spiralförmigen Linie (23) folgt, wobei der Zylinder eine Rotationsbewegung im Verhältnis zu dem Wellenleiter, der innerhalb des Zylinders angeordnet ist, aufweist, wobei der Wellenleiter gegenüber der Innenseite des Zylinders offen ist, die eine Höchstfrequenz-Überbrückung zum Schließen des Leiters bildet, **dadurch gekennzeichnet, dass** zwei Aussparungen (62, 63) auf jeder Seite des Leiters (24, 25), parallel zu diesem, über dessen gesamter Länge, ausgebildet sind, wobei sich die Öffnungen (64, 65) der Aussparungen im Wesentlichen in der Ebene der Öffnung (61) des Leiters befinden.

**2.** Antenne nach Anspruch 1, **dadurch gekennzeichnet, dass** die Öffnung (22) aus einer Abfolge elementarer Öffnungen (71, 72) ausgebildet ist, die auf jeder Seite der spiralförmigen Linie (23) angeordnet sind, wobei eine erste Reihe elementarer Öffnungen (71) auf einer Seite angeordnet ist und eine zweite Reihe elementarer Öffnungen (72) auf der anderen Seite angeordnet ist, wobei die Positionen der Öffnungen (72) der zweiten Reihe im Verhältnis zu den Positionen der Öffnungen (71) der ersten Reihe versetzt sind, sodass die strahlende Öffnung (22) nacheinander durch eine Öffnung (71) auf einer Seite der Linie (23) und anschließend durch eine Öffnung (72), die auf der anderen Seite angeordnet ist, und so weiter ausgebildet wird.

**3.** Antenne nach Anspruch 2, **dadurch gekennzeichnet, dass** die Öffnungen rechteckig sind, wobei die längere Seite entlang der spiralförmigen Linie (23) angeordnet ist.

**4.** Antenne nach einem der vorhergehenden Ansprüche, **dadurch gekennzeichnet, dass** der Leiter (24, 25) an einem Ende mit Sende- und Empfangsschaltungen eines Radars (9) und an seinem anderen Ende mit einer eingestellten Ladung (81) verbunden ist, wobei mindestens eine Aussparung (82) an dem anderen Ende in den Leiter führt.

**5.** Antenne nach einem der vorhergehenden Ansprüche, **dadurch gekennzeichnet, dass** sie vier Paare Wellenleiter (24, 25, 92, 93, 94, 95, 96, 97) umfasst, die jeweils rechtwinklig zueinander angeordnet sind, wobei jedes Paar einen Sendeleiter (24, 92, 94, 96) und einen Empfangsleiter (25, 93, 95, 97) umfasst.

**6.** Antenne nach einem der vorhergehenden Ansprüche, **dadurch gekennzeichnet, dass** der Zylinder (21) mittels eines Motors (3) mit einer Drehbewegung angetrieben wird.

**7.** Antenne nach einem der vorhergehenden Ansprüche, **dadurch gekennzeichnet, dass** sie in der Lage ist, mit einem Millimeterradar zu funktionieren.

**8.** Scanner, welcher ein Radarbild liefert, **dadurch gekennzeichnet, dass** er zumindest eines der Folgenden umfasst:

- eine Antenne (1) nach einem der vorhergehenden Ansprüche,
- einen Millimeterradar (9) und
- Mittel zur Visualisierung des Bilds,

wobei die Antenne (1) mit den Sende- und Empfangsschaltungen des Radars (9) verbunden ist, wobei ein Antennenbündel (F1, F2, F3, F4), das von einem Wellenleiter abgestrahlt wird, sich parallel zu der Achse (100) der Antenne (1) bewegt, wenn sich der Zylinder (21) dreht, wobei die Mittel zur Behandlung des Radars ein Bild vom SAR-Typ eines Ziels ausgehend von Signalen, die von dem Ziel erhalten werden, realisieren.

9. Scanner nach Anspruch 8, **dadurch gekennzeichnet, dass** die Antenne mehrere Paare Wellenleiter umfasst, wobei jedes Paar einen Sendeleiter und einen Empfangsleiter umfasst, wobei die Sendeleiter und die Empfangsleiter zumindest Folgendes umfassen:

- einen Generator (101) von Frequenzen ($f_1$, $f_2$, $f_3$, $f_4$), wobei jede Frequenz einem gegebenen Paar zugewiesen ist;
- einen ersten Kommutator (103), der die von dem Generator ausgegebenen Signale zeitgleich zur Frequenzerzeugung zu den Sendeleitern (24, 92, 94, 96) lenkt;
- einen zweiten Kommutator (104), der die von den Empfangsleitern ausgegebenen Signale zeitgleich zur Frequenzerzeugung zu den Empfangsschaltungen lenkt.

10. Scanner nach einem der Ansprüche 8 oder 9, **dadurch gekennzeichnet, dass**, da der Empfang homodyn erfolgt, die Empfangsschaltungen zumindest Folgendes umfassen:

- einen an die Sendeleitung angeschlossenen Koppler (107);
- einen ersten Mischer (105);
- einen zweiten Mischer (106),

wobei der erste Mischer eingangs das von dem Koppler (107) ausgegebene Signal und das Empfangssignal empfängt, und der zweite Mischer eingangs das von dem Koppler (107) ausgegebene Signal und das Empfangssignal, das um $\pi/2$ phasenversetzt ist, empfängt.

11. Scanner nach einem der Ansprüche 9 und 10, **dadurch gekennzeichnet, dass** die Antenne mehrere Paare Wellenleiter umfasst, sodass die Gesamtheit der Antennenbündel (F1, F2, F3, F4) einen Bereich von 360° um die Antennenachse (100) abtasten.

12. Vorrichtung zur Personenüberprüfung, **dadurch gekennzeichnet, dass** sie Folgendes umfasst:

- mindestens einen gekrümmten Korridor (110), der eine erste Krümmung (113) und eine zweite Krümmung (114) gegenüber der ersten Krümmung aufweist;
- Scanner (20) nach Anspruch 11, wobei pro Korridor zwei Scanner (20) im Wesentlichen an der Stelle (115) angeordnet sind, an der sich die Richtung der Krümmung ändert, wobei sich die zu überprüfenden Personen zwischen den beiden Scannern hindurch bewegen, wobei die Scanner Radarbilder über 360° hinweg realisieren.

13. Überprüfungsvorrichtung nach Anspruch 12, **dadurch gekennzeichnet, dass** die Korridore angrenzend sind.

14. Überprüfungsvorrichtung nach einem der Ansprüche 12 oder 13, **dadurch gekennzeichnet, dass** sie in der Lage ist, in Flughallen für die Überprüfung von Passagieren verwendet zu werden.

**Claims**

1. An antenna comprising at least one waveguide of rectangular section (24, 25) and a cylinder (21) having an opening (22) along a helical line (23), said cylinder having a relative rotational movement in relation to the waveguide placed inside said cylinder, the waveguide being open facing the inner face of said cylinder which forms a microwave short-circuit to close the guide, **characterized in that** two cavities (62, 63) are produced on each side of the guide (24, 25), parallel thereto, over its entire length, the openings (64, 65) of the cavities being substantially in the plane of the opening (61) of the guide.

2. The antenna as claimed in claim 1, **characterized in that** the opening (22) is formed by a succession of individual openings (71, 72) arranged on each side of the helical line (23), a first series of individual openings (71) being arranged on one side and a second series of individual openings (72) being arranged on the other side, the positions of the openings (72) of the second series being staggered relative to the positions of the openings (71) of the first series such that the radiant opening (22) is formed in succession by an opening (71) on one side of said line (23) then an opening (72) arranged on the other side, and so on.

3. The antenna as claimed in claim 2, **characterized in that** said openings are rectangular, the large side being arranged along the helical line (23).

4. The antenna as claimed in any one of the preceding claims, **characterized in that**, the guide (24, 25) being connected at one end to the transmission and reception circuits of a radar (9) and at its other end to a matched load (81), at least one cavity (82) emerges on the guide at said other end.

5. The antenna as claimed in any one of the preceding claims, **characterized in that** it comprises four pairs of waveguides (24, 25, 92, 93, 94, 95, 96, 97) each arranged at right angles to one another, each pair comprising a transmission guide (24, 92, 94, 96) and a reception guide (25, 93, 95, 97).

6. The antenna as claimed in any one of the preceding claims, **characterized in that** the cylinder (21) is driven in a rotational movement by means of a motor (3).

7. The antenna as claimed in any one of the preceding claims, **characterized in that** it is suitable for operating with a millimetric radar.

8. A scanner delivering a radar image, **characterized in that** it comprises at least:

   - an antenna (1) as claimed in any one of the preceding claims,
   - a millimetric radar (9) and
   - means for displaying said image,

   the antenna (1) being linked to the transmission and reception circuits of said radar (9), an antenna beam (F1, F2, F3, F4) radiated by a waveguide being displaced parallel to the axis (100) of the antenna (1) when the cylinder (21) is rotating, the processing means of said radar producing an image of SAR type of a target from the signals received from said target.

9. The scanner as claimed in claim 8, **characterized in that**, the antenna comprising a plurality of pairs of waveguides, each pair comprising a transmission guide and a reception guide, the transmission and reception circuits comprise at least:

   - a generator (101) of frequencies ($f_1$, $f_2$, $f_3$, $f_4$), each frequency being assigned to a given pair;
   - a first switch (103) switching the signals from said generator to the transmission guides (24, 92, 94, 96) synchronously with the generation of frequencies;
   - a second switch (104) switching the signals from the reception guides to the reception circuits, synchronously with the frequency generation.

10. The scanner as claimed in either one of claims 8 and 9, **characterized in that**, the reception being of homodyne type, the reception circuits comprise at least:

    - a coupler (107) connected to the transmission line;
    - a first mixer (105);
    - a second mixer (106)

    the first mixer receiving as input the signal from the coupler (107) and the reception signal and the second mixer receiving as input the signal from the coupler (107) and the reception signal phase-offset by $\pi/2$.

11. The scanner as claimed in either one of claims 9 and 10, **characterized in that** the antenna comprises a number of pairs of waveguides such that altogether the antenna beams (F1, F2, F3, F4) scan the space by 360° about the antenna axis (100).

12. A device for inspecting persons, **characterized in that** it comprises:

    - at least one curved corridor (110), exhibiting a first curvature (113) and a second curvature (114) opposite to the first curvature;
    - scanners (20) as claimed in claim 11, two scanners (20) per corridor being placed substantially at the point (115) where the curvature changes direction, the persons to be inspected passing between said two scanners, said scanners producing radar images over 360°.

13. The inspection device as claimed in claim 12, **characterized in that** the corridors are contiguous.

14. The inspection device as claimed in either one of claims 12 and 13, **characterized in that** it is suitable for use in embarkation zones for the inspection of passengers.

FIG.1

EP 3 001 882 B1

FIG.2

FIG.3

FIG.4

FIG.5a

FIG.5b

FIG.5c

FIG.6a

FIG.6b

FIG.7

FIG.8a

FIG.8b

FIG.9

FIG.10

FIG.11

**RÉFÉRENCES CITÉES DANS LA DESCRIPTION**

**Documents brevets cités dans la description**

- FR 2855642 A1

**Littérature non-brevet citée dans la description**

- **J.DARRICAU.** Physique et Théorie du Radar. 1994, 483